# EUROPÄISCHE PATENTANMELDUNG

(11) **EP 4 627 910 A1**
(43) Veröffentlichungstag der Anmeldung: **08.10.2025**
(21) Anmeldenummer: 25161656.1
(22) Anmeldetag: 04.03.2025
(51) Int. Cl.: A01K 1/00

(54) **TRENNRAHMEN-VORRICHTUNG FÜR LIEGEBOXEN**

(30) Priorität: 27.03.2024 EP 24166990
(71) Anmelder: Zimmermann Stalltechnik Vertriebs GmbH, 88436 Eberhardzell (DE)
(72) Erfinder: Zimmermann, Erwin, 88436 Eberhardzell-Ritzenweiler (DE)
(74) Vertreter: Kiessling, Christian

(57) **Zusammenfassung**

Eine Trennrahmen-Vorrichtung (100) für Liegeboxen (200) zur Haltung von Kühen, mit einem mehrfach gebogenen, in eine Mehrzahl von Teilbereichen (121, 122, 123, 124) unterteilten Trennrahmen (110) ist mit einem Kopfbereich für die Kuh versehen, dessen horizontale Länge auf 35% bis 45% der horizontalen Gesamtlänge des Trennrahmens bemessen ist, um es einer Kuh für ein Aufstehen aus einer Liegeposition bequem zu ermöglichen, eine notwendige Kopfbewegung ausreichend weit auszuführen, um im Zusammenhang mit einer Schwungbewegung des Kopfes ein notwendiges Bewegungsmoment für ein Aufstehen zu erzeugen.

## Beschreibung

Die Erfindung betrifft eine Trennrahmen-Vorrichtung für Liegeboxen zur Haltung von Kühen, mit einem mehrfach gebogenen, in einen vorderen und einen hinteren sowie einen unteren und einen oberen Teilbereich unterteilten Trennrahmen, der mittels seitlichen Biegens seiner beiden Enden einen Seitenversatz aufweist derart, dass die beiden Enden im Bereich einer Bodenbefestigung nebeneinander zu liegen kommen und im Bereich jeweiliger, im Wesentlichen vertikal ausgerichteter Stützholme nebeneinander in der Bodenbefestigung verankert sind, wobei der Trennrahmen in dem hinteren Teilbereich eine obere Strebe und eine zu dieser in vorgegebenem Abstand angeordneten untere Strebe aufweist, die über eine der Bodenbefestigung ferne Umkehrbiegung miteinander verbunden sind, wobei die obere Strebe und die untere Strebe in einem unteren Teilbereich des Trennrahmens in jeweilige, der Bodenbefestigung nahe und mutuell parallel geführte Rahmenabschnitte münden.

Trennrahmen-Vorrichtungen eingangs genannter Art werden im Stand der Technik verwendet, um zumindest vorrübergehend in einem Stall gehaltenen Stalltieren ein von einer Stallbox gebildetes geschütztes und gesichertes Areal zur Verfügung zu stellen, in dem sie ungestört ruhen, ruminieren und schlafen können.

Die bekannten Trennrahmen-Vorrichtungen weisen indes den Nachteil auf, dass eine artgerechte Haltung insofern erschwert ist, dass zum einen eine freie Bewegung insbesondere des Kopfes eines Stalltieres innerhalb der Stallbox verhindert ist und zum anderen eine uneingeschränkte Bewegung des Stalltieres innerhalb der Stallbox unter Ausnutzung des gesamten Areals der Stallbox nicht gewährleistet ist. Letzteres macht sich unter anderem dadurch bemerkbar, dass ein hinterer Teil des Areals der Stallbox mit Kot bedeckt ist, so dass eine betreffende Kuh u.a. gezwungen ist, im eigenen Kot zu liegen.

Bei Stallboxen für Kühe ist insbesondere zu beachten, dass es für eine Kuh für ein Aufstehen aus einer Liegeposition notwendig ist, eine u.a. seitliche Kopfbewegung auszuführen, um im Zusammenhang mit einer Schwungbewegung des Kopfes ein ausreichendes Bewegungsmoment für ein Aufstehen zu erzeugen. Zu diesem Zweck ist eine artgerechte Liegebox daher mit einem ausreichenden Raum bietenden Kopfbereich versehen.

Aufgabe der Erfindung ist es deshalb, eine Trennrahmen-Vorrichtung zu schaffen, mit deren Hilfe eine artgerechtere Haltung von Kühen als im Stand der Technik ermöglicht ist.

Für eine Trennrahmen-Vorrichtung eingangs genannter Art wird diese Aufgabe erfindungsgemäß dadurch gelöst, dass die horizontale Länge eines in dem vorderen Teilbereich befindlichen Kopfbereiches einer in einer Liegebox befindlichen Kuh auf 35% bis 45% der horizontalen Gesamtlänge des Trennrahmens bemessen ist.

Bevorzugte Ausführungsformen der Erfindung sind Gegenstand der Unteransprüche, deren Elemente im Sinne einer weiteren Verbesserung des Lösungsansatzes der der Erfindung zugrunde gelegten Aufgabe wirken.

Bei der erfindungsgemäßen Trennrahmen-Vorrichtung wird mittels des Merkmals, dass die horizontale Länge eines in dem vorderen Teilbereich befindlichen Kopfbereiches einer in einer Liegebox befindlichen Kuh auf 35% bis 45% der horizontalen Gesamtlänge des Trennrahmens bemessen ist erreicht, dass es einer Kuh für ein Aufstehen aus einer Liegeposition ermöglicht ist, eine notwendige Kopfbewegung ausreichend weit auszuführen, um im Zusammenhang mit einer Schwungbewegung des Kopfes ein notwendiges Bewegungsmoment für ein Aufstehen zu erzeugen.

Gemäß einer ersten bevorzugten Ausführungsform der erfindungsgemäßen Trennrahmen-Vorrichtung ist vorgesehen, dass die Länge eines Kopfbereiches einer in einer Liegebox befindlichen Kuh auf etwa 40% der Gesamtlänge des Liegeboxenbügels bemessen ist.

Eine obere Strebe in dem oberen Teilbereich des Liegeboxenbügels ist bei der erfindungsgemäßen Trennrahmen-Vorrichtung vorzugsweise parallel zu einer unteren Strebe des Liegeboxenbügels angeordnet, wobei ein Abstand der oberen Strebe zur unteren Strebe, gemessen von der Unterfläche der oberen Strebe bis zur Oberfläche der unteren Strebe, bei einem Trennrahmen mit einer horizontalen Länge von 160 cm vorzugsweise auf zwischen 25 cm und 35 cm und insbesondere auf 30 cm oder 31 cm bemessen ist.

Ein Abstand der oberen Strebe zur Liegefläche ist bei einem Trennrahmen mit einer horizontalen Länge von 160 cm vorzugsweise auf zwischen 125 cm und 155 cm und insbesondere auf 140 cm bemessen.

Ein innerer Scheitelpunkt einer eine hintere Begrenzung des Kopfbereiches bildenden Umkehrbiegung des unteren Teilbereiches einer betreffenden Strebe kommt vorzugsweise in einem Abstand von 25% bis 45%, insbesondere von 30% des Abstandes des inneren Scheitelpunktes einer eine vordere Begrenzung des Kopfbereiches bildende Umkehrbiegung des oberen Teilbereiches der betreffenden Strebe der Liegebox zu liegen.

Des Weiteren kommt der innere Scheitelpunkt einer eine hintere Begrenzung des Kopfbereiches bildenden Umkehrbiegung des unteren Teilbereiches einer betreffenden Strebe in einem Abstand von vorzugsweise 50% bis 70%, insbesondere 60% des Abstandes des Mittelpunktes der oberen Strebe des hinteren Teilbereiches zur Liegefläche der Liegebox zu liegen.

Ein von der Oberfläche einer jeweiligen Rückbiegung der beiden Rahmenabschnitte in einem unteren Teilbereich des Trennrahmens bis zu einem Scheitelpunkt einer oberen Umkehrbiegung des Kopfbereiches gemessener Abstand ist vorzugsweise auf zwischen 55% und 65%, insbesondere 60% des Abstandes der oberen Strebe des hinteren Teilbereiches zur Liegefläche bemessen.

Zur Begrenzung eines Hineingehens einer Kuh in die Liegebox kopfvoran in Richtung auf den Kopfbereich der Liegebox zu ist vorzugsweise eine Nackenkette vorgesehen, die im Bereich der vorderen Umkehrbiegung des Kopfbereiches direkt unterhalb der oberen Strebe des Liegeboxbügels angeordnet ist.

Die Nackenkette kann beispielsweise mittels einer Spiralfeder elastisch gelagert und dadurch expandierbar ausgeführt sein.

Ein Anbringungspunkt der Nackenkette ist vorzugsweise unterhalb der oberen Strebe des Liegeboxbügels in einem Abstand von 180 cm bis 200 cm, insbesondere 195 cm zu einem hinteren Begrenzungspaneel der Liegefläche angeordnet.

Der Anbringungspunkt der Nackenkette unterhalb der oberen Strebe des Liegeboxbügels ist dabei vorzugsweise in einem Abstand von 180 cm bis 200 cm, vorzugsweise 195 cm zu einer hinteren Begrenzung der Liegefläche angeordnet.

Die obere Strebe und die untere Strebe in dem oberen Teilbereich des Trennrahmens sind vorzugsweise so weit von einer Liegefläche einer Kuh beabstandet, um für eine Kuh eine effektive Begrenzung auch bei einem wiederholten Aufstehen, freien Stehen und anschließendes Hinlegen innerhalb der Liegebox zu bilden.

Die erfindungsgemäße Trennrahmen-Vorrichtung wird im Folgenden anhand einer bevorzugten Ausführungsform erläutert, die in der Figur der Zeichnung dargestellt ist.

Darin zeigen:
- Fig. 1: eine bevorzugte Ausführungsform der erfindungsgemäßen Trennrahmen-Vorrichtung in einer Seitenansicht;
- Fig. 2: in Fig. 1 dargestellte bevorzugte Ausführungsform der erfindungsgemäßen Trennrahmen-Vorrichtung in einer dreidimensionalen Ansicht von schräg hinten.

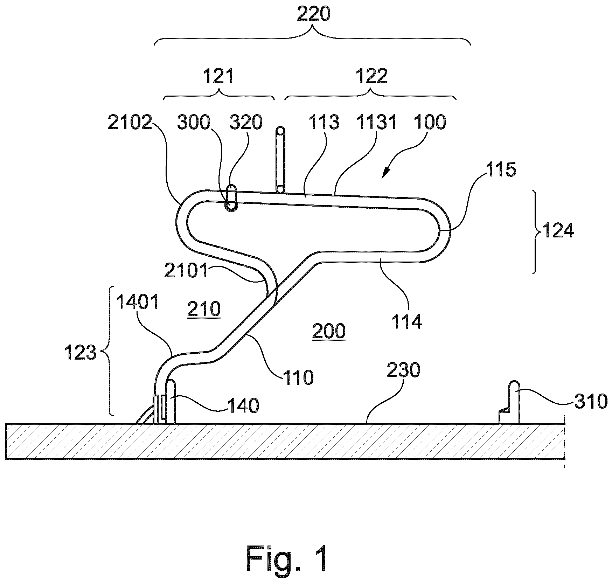

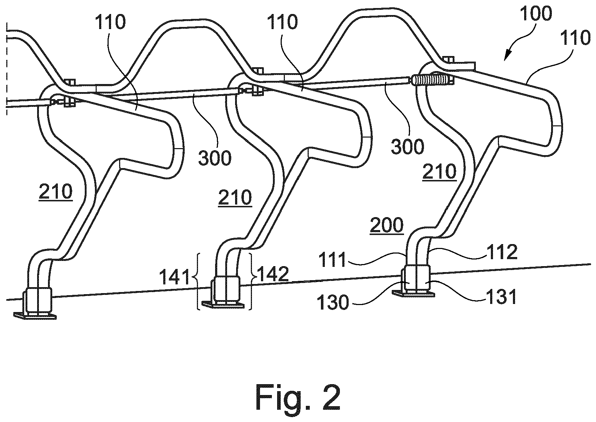

Die in den Figuren 1 und 2 dargestellte erfindungsgemäße Trennrahmen-Vorrichtung 100 ist für Liegeboxen 200 zur Haltung von Kühen vorgesehen und enthält einen mehrfach gebogenen, in einen vorderen und einen hinteren sowie einen unteren und einen oberen Teilbereich 121, 122, 123, 124 unterteilten Trennrahmen 110.

Der Trennrahmen weist mittels seitlichen Biegens seiner beiden Enden 111, 112 einen Seitenversatz auf derart, dass die beiden Enden 111, 112 im Bereich einer Bodenbefestigung 140 nebeneinander zu liegen kommen und im Bereich jeweiliger, im Wesentlichen vertikal ausgerichteter Stützholme 130, 131 nebeneinander in der Bodenbefestigung 140 verankert sind.

Der Trennrahmen 110 weist in dem hinteren Teilbereich 122 eine obere Strebe 113 und eine zu dieser in vorgegebenem Abstand angeordneten untere Strebe 114 auf, die über eine der Bodenbefestigung 140 ferne Umkehrbiegung 115 miteinander verbunden sind, wobei die obere Strebe 113 und die untere Strebe 114 in einem unteren Teilbereich 123 des Trennrahmens in die jeweiligen, der Bodenbefestigung 140 nahen und mutuell parallel geführten Rahmenabschnitte 141, 142 münden.

Die horizontale Länge eines in dem vorderen Teilbereich 121 befindlichen Kopfbereiches 210 einer in einer Liegebox 200 befindlichen Kuh ist 40% der Gesamtlänge des Trennrahmens 110 bemessen.

Eine obere Strebe 113 in dem oberen Teilbereich des Trennrahmens 110 ist parallel zu einer unteren Strebe 114 des Trennrahmens 110 angeordnet, wobei ein Abstand der oberen Strebe 113 zur unteren Strebe 114, gemessen von der Unterfläche der oberen Strebe 113 bis zur Oberfläche der unteren Strebe 114 bei einem Trennrahmen 110 mit einer horizontalen Länge von 160 cm auf 31 cm bemessen ist.

Ein Abstand der oberen Strebe 113 zur Liegefläche 230 ist bei der erfindungsgemäßen Trennrahmen-Vorrichtung 100 mit einer horizontalen Länge von 160 cm auf 140 cm bemessen.

Des Weiteren kommt ein innerer Scheitelpunkt einer eine hintere Begrenzung des Kopfbereiches 210 bildenden Umkehrbiegung 2101 des unteren Teilbereiches 123 einer betreffenden Strebe 113 in einem Abstand von 30% des Abstandes des inneren Scheitelpunktes einer eine vordere Begrenzung des Kopfbereiches 210 bildende Umkehrbiegung 2102 des oberen Teilbereiches 124 der betreffenden Strebe 113 der Liegebox 200 zu liegen.

Der innere Scheitelpunkt einer eine hintere Begrenzung des Kopfbereiches 210 bildenden Umkehrbiegung 2101 des unteren Teilbereiches 123 einer betreffenden Strebe 113 kommt des Weiteren in einem Abstand von 60% des Abstandes des Mittelpunktes 1131 der oberen Strebe 113 des hinteren Teilbereiches 122 zur Liegefläche 230 der Liegebox 200 zu liegen.

Ein von der Oberfläche einer jeweiligen Rückbiegung 1401 der beiden Rahmenabschnitte 141, 142 in einem unteren Teilbereich 123 des Trennrahmens 110 bis zu einem Scheitelpunkt einer oberen Umkehrbiegung 2102 des Kopfbereiches 210 gemessener Abstand des Mittelpunktes 1131 ist auf 60% des Abstandes der oberen Strebe 113 des hinteren Teilbereiches 122 zur Liegefläche 230 bemessen.

Zur Begrenzung eines Hineingehens einer Kuh in die Liegebox 200 kopfvoran in Richtung auf den Kopfbereich 210 der Liegebox 200 zu ist eine Nackenkette 300 vorgesehen, die im Bereich der vorderen Umkehrbiegung 2101 des Kopfbereiches 210 direkt unterhalb der oberen Strebe 113 des Trennrahmens 110 angeordnet ist.

Die Nackenkette 300 ist mittels einer Spiralfeder elastisch gelagert und dadurch expandierbar.

Ein Anbringungspunkt der Nackenkette 300 ist unterhalb der oberen Strebe 113 des Trennrahmens 110 in einem Abstand von 195 cm zu einem hinteren Begrenzungspaneel 310 der Liegefläche 230 angeordnet.

Der Anbringungspunkt der Nackenkette 300 ist unterhalb der oberen Strebe 113 des Trennrahmens 110 in einem Abstand von 195 cm zum hinteren Begrenzungspaneel 310 der Liegefläche 230 angeordnet.

Die obere Strebe 113 und die untere Strebe 114 in dem oberen Teilbereich 124 des Trennrahmens 110 sind so weit von einer Liegefläche 230 einer Kuh beabstandet, um für eine Kuh eine effektive Begrenzung auch bei einem wiederholten Aufstehen, freien Stehen und anschließendes Hinlegen innerhalb der Liegebox 200 zu bilden.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

### Bezugszeichenliste

- 100: Trennrahmen-Vorrichtung
- 110: Trennrahmen
- 111, 112: Enden der Trennrahmen
- 113: obere Strebe
- 1131: Mittelpunkt der oberen Strebe
- 114: untere Strebe
- 115: Umkehrbiegung
- 121: vorderer Teilbereich
- 122: hinterer Teilbereich
- 123: unterer Teilbereich
- 124: oberer Teilbereich
- 130, 131: Stützholme
- 140: Bodenbefestigung
- 1401: Rückbiegung
- 200: Liegebox
- 210: Kopfbereich
- 2101: hintere Umkehrbiegung
- 2102: obere Umkehrbiegung
- 220: horizontale Gesamtlänge
- 230: Liegefläche
- 300: Nackenkette
- 310: Begrenzungspaneel
- 320: Anbringungspunkt

## Patentansprüche

1. Trennrahmen-Vorrichtung (100) für Liegeboxen (200) zur Haltung von Kühen, mit einem mehrfach gebogenen, in einen vorderen und einen hinteren sowie einen unteren und einen oberen Teilbereich (121, 122, 123, 124) unterteilten Trennrahmen (110), der mittels seitlichen Biegens seiner beiden Enden (111, 112) einen Seitenversatz aufweist derart, dass die beiden Enden (111, 112) im Bereich einer Bodenbefestigung (140) nebeneinander zu liegen kommen und im Bereich jeweiliger, im Wesentlichen vertikal ausgerichteter Stützholme (130, 131) nebeneinander in der Bodenbefestigung (140) verankert sind, wobei der Trennrahmen (110) in dem hinteren Teilbereich (122) eine obere Strebe (113) und eine zu dieser in vorgegebenem Abstand angeordnete untere Strebe (114) aufweist, die über eine der Bodenbefestigung (140) ferne Umkehrbiegung (115) miteinander verbunden sind, wobei die obere Strebe (113) und die untere Strebe (114) in einem unteren Teilbereich (123) des Trennrahmens (110) in jeweilige, der Bodenbefestigung (140) nahe und mutuell parallel geführte Rahmenabschnitte (141, 142) münden,
**dadurch gekennzeichnet, dass**
- die horizontale Länge eines in dem vorderen Teilbereich (121) befindlichen Kopfbereiches (210) einer in einer Liegebox (200) befindlichen Kuh auf 35% bis 45% der horizontalen Gesamtlänge (220) des Trennrahmens (110) bemessen ist.

2. Trennrahmen-Vorrichtung nach Anspruch 1, **dadurch gekennzeichnet, dass** die horizontale Länge (220) eines Kopfbereiches (210) einer in einer Liegebox (200) befindlichen Kuh auf etwa 40% der horizontalen Gesamtlänge (220) des Trennrahmens (110) bemessen ist.

3. Trennrahmen-Vorrichtung nach einem der vorhergehenden Ansprüche, **dadurch gekennzeichnet, dass** in dem oberen Teilbereich (124) eine obere Strebe (113) des Trennrahmens (110) parallel zu einer unteren Strebe (114) des Trennrahmens (110) angeordnet ist.

4. Trennrahmen-Vorrichtung nach Anspruch 3, **dadurch gekennzeichnet, dass** ein Abstand der oberen Strebe (113) zur unteren Strebe (114), gemessen von der Unterfläche der oberen Strebe (113) bis zur Oberfläche der unteren Strebe (114), bei einem Trennrahmen (110) mit einer horizontalen Länge von 160 cm auf zwischen 25 cm und 35 cm bemessen ist.

5. Trennrahmen-Vorrichtung nach Anspruch 4, **dadurch gekennzeichnet, dass** der Abstand der oberen Strebe (113) zur unteren Strebe (114), gemessen von der Unterfläche der oberen Strebe (113) bis zur Oberfläche der unteren Strebe (114), bei einem Trennrahmen mit einer horizontalen Länge von 160 cm auf 31 cm bemessen ist.

6. Trennrahmen-Vorrichtung nach einem der vorhergehenden Ansprüche, **dadurch gekennzeichnet, dass** ein Abstand der oberen Strebe (113) zur Liegefläche (230) bei einem Trennrahmen (110) mit einer horizontalen Länge von 160 cm auf zwischen 125 cm und 155 cm bemessen ist.

7. Trennrahmen-Vorrichtung nach einem der vorhergehenden Ansprüche, **dadurch gekennzeichnet, dass** der Abstand der oberen Strebe (113) zur Liegefläche (230) bei einem Trennrahmen (110) mit einer horizontalen Länge von 160 cm auf 140 cm bemessen.

8. Trennrahmen-Vorrichtung nach einem der vorhergehenden Ansprüche, **dadurch gekennzeichnet, dass** ein innerer Scheitelpunkt einer eine hintere Begrenzung des Kopfbereiches (210) bildenden Umkehrbiegung (2101) des unteren Teilbereiches (123) einer betreffenden Strebe (113) in einem Abstand von 25% bis 45% des Abstandes des inneren Scheitelpunktes einer eine vordere Begrenzung des Kopfbereiches (210) bildende Umkehrbiegung (2102) des oberen Teilbereiches (124) der betreffenden Strebe (113) der Liegebox (200) zu liegen kommt.

9. Trennrahmen-Vorrichtung nach einem Anspruch 8, **dadurch gekennzeichnet, dass** ein innerer Scheitelpunkt einer eine hintere Begrenzung des Kopfbereiches (210) bildenden Umkehrbiegung (2101) des unteren Teilbereiches (123) einer betreffenden Strebe (113) in einem Abstand von 30% des Abstandes des inneren Scheitelpunktes einer eine vordere Begrenzung des Kopfbereiches (210) bildende Umkehrbiegung (2102) des oberen Teilbereiches (124) der betreffenden Strebe (113) der Liegebox (200) zu liegen kommt.

10. Trennrahmen-Vorrichtung nach einem der vorhergehenden Ansprüche, **dadurch gekennzeichnet, dass** ein innerer Scheitelpunkt einer eine hintere Begrenzung des Kopfbereiches (210) bildenden Umkehrbiegung (2101) des unteren Teilbereiches (123) einer betreffenden Strebe (113) in einem Abstand von 50% bis 70% des Abstandes des Mittelpunktes (1131) der oberen Strebe (113) des hinteren Teilbereiches (122) zur Liegefläche (230) der Liegebox (200) zu liegen kommt.

11. Trennrahmen-Vorrichtung nach Anspruch 10, **dadurch gekennzeichnet, dass** der innere Scheitelpunkt einer eine hintere Begrenzung des Kopfbereiches (210) bildenden Umkehrbiegung (2101) des unteren Teilbereiches (123) einer betreffenden Strebe (113) in einem Abstand von 60% des Abstandes des Mittelpunktes (1131) der oberen Strebe (113) des hinteren Teilbereiches (122) zur Liegefläche (230) der Liegebox (200) zu liegen kommt.

12. Trennrahmen-Vorrichtung nach einem der vorhergehenden Ansprüche, **dadurch gekennzeichnet, dass** ein von der Oberfläche einer jeweiligen Rückbiegung (1401) der beiden Rahmenabschnitte (141, 142) in einem unteren Teilbereich (123) des Trennrahmens (110) bis zu einem Scheitelpunkt einer oberen Umkehrbiegung (2102) des Kopfbereiches (210) gemessener Abstand des Mittelpunktes (1131) auf zwischen 55% und 65% des Abstandes der oberen Strebe (113) des hinteren Teilbereiches (122) zur Liegefläche (230) bemessen ist.

13. Trennrahmen-Vorrichtung nach Anspruch 12, **dadurch gekennzeichnet, dass** ein von der Oberfläche einer jeweiligen Rückbiegung (1401) der beiden Rahmenabschnitte (141, 142) in einem unteren Teilbereich (123) des Trennrahmens (110) bis zu einem Scheitelpunkt einer oberen Umkehrbiegung (2102) des Kopfbereiches (210) gemessener Abstand des Mittelpunktes (1131) auf etwa 60% des Abstandes der oberen Strebe (113) des hinteren Teilbereiches (122) zur Liegefläche (230) bemessen ist.

14. Trennrahmen-Vorrichtung nach einem der vorhergehenden Ansprüche, **dadurch gekennzeichnet, dass** zur Begrenzung eines Hineingehens einer Kuh in die Liegebox (200) kopfvoran in Richtung auf den Kopfbereich (210) der Liegebox (200) zu eine Nackenkette (300) vorgesehen ist, die im Bereich der vorderen Umkehrbiegung (2102) des Kopfbereiches (210) direkt unterhalb der oberen Strebe (113) des Trennrahmens (110) angeordnet ist.

15. Trennrahmen-Vorrichtung nach Anspruch 14, **dadurch gekennzeichnet, dass** die Nackenkette (300) mittels einer Spiralfeder elastisch gelagert und dadurch expandierbar ist.

16. Trennrahmen-Vorrichtung nach einem der Ansprüche 14 oder 15, **dadurch gekennzeichnet, dass** ein Anbringungspunkt (320) der Nackenkette (300) unterhalb der oberen Strebe (113) des Trennrahmens (110) in einem Abstand von 180 cm bis 200 cm zu einem hinteren Begrenzungspaneel (310) der Liegefläche (230) angeordnet ist.

17. Trennrahmen-Vorrichtung nach Anspruch 16, **dadurch gekennzeichnet, dass** der Anbringungspunkt (320) der Nackenkette (300) unterhalb der oberen Strebe (113) des Trennrahmens (110) in einem Abstand von 195 cm zum hinteren Begrenzungspaneel (310) der Liegefläche (230) angeordnet ist.

18. Trennrahmen-Vorrichtung nach einem der vorhergehenden Ansprüche, **dadurch gekennzeichnet, dass** die obere Strebe (113) und die untere Strebe (114) in dem oberen Teilbereich (124) des Trennrahmens (110) so weit von einer Liegefläche (230) einer Kuh beabstandet sind, um für eine Kuh eine effektive Begrenzung auch bei einem wiederholten Aufstehen, freien Stehen und anschließendem Hinlegen innerhalb der Liegebox (200) zu bilden.
